Europäisches Patentamt

European Patent Office

Office européen des brevets

(19)

(11) Publication number: **0 119 975**
**B1**

# EUROPEAN PATENT SPECIFICATION

(45) Date of publication of patent specification: **15.10.86**

(51) Int. Cl.⁴: **C 09 J 5/00**

(21) Application number: **84850075.7**

(22) Date of filing: **09.03.84**

(54) Method of bonding with two-component adhesive objects which transmit static and dynamic forces to sandwich constructions.

(30) Priority: **16.03.83 SE 8301438**

(43) Date of publication of application:
**26.09.84 Bulletin 84/39**

(45) Publication of the grant of the patent:
**15.10.86 Bulletin 86/42**

(84) Designated Contracting States:
**DE FR GB IT NL**

(56) References cited:
**FR-A- 830 576**
**GB-A- 653 151**
**GB-A-2 028 227**

(73) Proprietor: **DIAB-BARRACUDA AB**
**S-59400 Gamleby (SE)**

(72) Inventor: **Svensson, Paul**
**Krokusvägen 2**
**S-31200 Laholm (SE)**

(74) Representative: **Grennberg, Erik Bertil et al**
**H ALBIHNS PATENTBYRA AB Box 7664**
**S-103 94 Stockholm (SE)**

Courier Press, Leamington Spa, England.

## Description

The invention relates to a method of bonding beams and similar objects to sandwich constructions of the type in which a core of cellular plastic or other high-quality sandwich core material has a facing layer of sheet metal or other high-quality facing material, said object being bonded to the facing layer, which is in turn bonded with two-component adhesive to the core.

Sandwich constructions have been used for a long time. An early example is FR—A—830 576, where it is recognized that two solid layers may be advantageously sandwiched on each side of a soft, somewhat flexible layer, like a fibrous material, felt, cork, asbestos or similar, having a porosity such that an adhesive will fix readily thereto. Because of the nature of this intermediate layer, it will take up changes due to temperature and humidity changes, shock, strong forces etc. All this is nowadays recognized as advantageous properties of sandwich materials.

In recent years, sandwich constructions have become more and more common, in which a core of high-quality cellular plastic is surrounded on either side by metal facing layers, often of sheet aluminium. The light and strong constructions thus obtained have had a wide variety of applications, e.g. in the frame and chassi of vehicles, loading platforms on trucks, as well as the shell plating and deck of small vessels. Materials of this type have proved to have good strength properties, and by virtue of the fact that the cellular plastic core has a low coefficient of heat transfer, these materials can also be used for tank and refrigeration vehicles.

It has however proved difficult to fix supporting beams and similar objects to these sandwiched constructions. For example, it is desirable to fix supporting beams securely and reliably to truck loading gates. Another example is the bonding of corner boxes in containers made of sandwich material. Another example is the mounting of loading hooks on the ceiling of refrigeration vehicles, for hanging up animal carcasses.

What is desired in all of these cases is a bond which is directly connected to the facing layer of the sandwich material and which makes it possible to diminish the forces, both static and especially dynamic, exerted on the sandwich material.

Attempts have been made previously to reinforce the facing layer locally at those locations where stresses occur.

This does of course provide a distribution of the forces, which reduces the problem, but this solution is often expensive, especially since one must allow maximum loads which only seldom occur for a short period of time.

In defining the problem more closely, which is particularly evident in bonding an object to the facing layer of a sandwich construction of the type intended here by means of two-component adhesive, we have found a basic problem to be that an adhesive joint provides a very rigid bond, whereby a dynamic or static force applied is immediately absorbed by the facing layer, thereby deforming either the adhesive joint between the object and the facing layer, or the facing layer and its bond to the core.

The purpose of the invention is to achieve a simpler and thus less expensive method of bonding force-transmitting objects to sandwich constructions for static and especially dynamic loads. With the insight into the nature of the problem as described above, the solution according to the invention provides in a method of the type described by way of introduction bonding to the facing layer with a two-component adhesive a plate of a material more than 20 times thicker than the adhesive joint and with a lower modulus of elasticity than the modulus of elasticity of the adhesive joint, and bonding the object with a two-component adhesive to the opposite side of the plate.

A suitable material for the plate can be a PVC cellular plastic of high-quality type. We ourselves manufacture under the trademark Divinycell (registered trademark) structural cellular plastic with different, well-specified strength characteristics, and moduli of elasticity. Suitable moduli of elasticity have proved to be 80—500 MPa for common types of adhesives with moduli of elasticity from 1000 to 5000 MPa.

In a first embodiment, the object is fixed to the outside of the facing layer, with the plate functioning as an intermediate layer. This intermediate layer can absorb a force while being deformed itself, and if a suitable PVC cellular plastic is used for example, the intermediate layer can absorb forces during deformation. With the above structural cellular plastic, the deformation can be as much as 2—3% without any permanent deformation, i.e. with only elastic deformation. Shock forces can thus be absorbed without breaking the adhesive joint; a normal adhesive joint, with a thickness of 50 μm for example, cannot really absorb any deformation whatsoever without fracturing. In view of the fact that the sandwich construction can be load-bearing, it is clear that significant inertial forces can be involved.

In one example relating to the mounting of a carcass hook in the ceiling of a refrigerator car made of sandwich material, the structure had to withstand a continuous load of 250 kg. It was necessary to consider the dynamic load to be twice that. The problem was solved with an intermediate layer in the form of a plate, $100 \times 100$ mm, of our Divinylcell H200, which has a rupture limit of 44 kg/cm$^2$, bonded with two-component adhesive to a sandwich structure with core material of Divinycell quality H80 with a rupture limit of 18 kg/cm$^2$ with a bonding strength of 1800 kg. With a fatigue requirement of 10$^6$ load cycles, one should take half of this, i.e. 900 kg, providing a safety factor of four. The strength of the adhesive joints is approximately 100 kg/cm$^2$ (for both tensile and shear stress), which is apparently never reached. The facing layer of the sandwich structure is also spared deforming shock stresses. A suitable thickness for the intermediate plate is 4 mm.

The objects to be fixed via a plate which has a lower modulus of elasticity than the adhesive can also be a metal plate designed in turn to be fixed, by means of a threaded fastener for example, to a beam, support or the like, and it is possible to mount this plate inside the facing layer of the sandwich construction, and provide the intermediate plate and the facing with a through-hole for a bolt or the like.

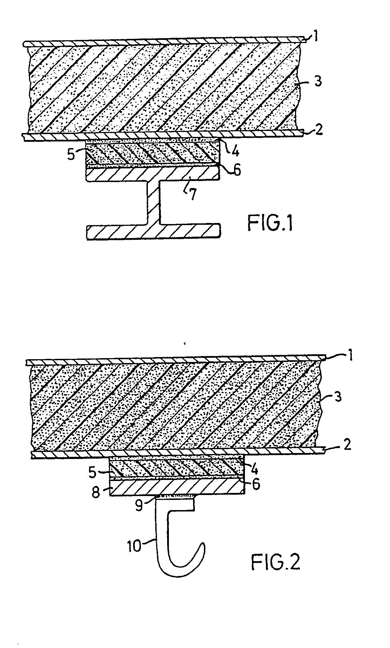

The invention will be described in more detail with the aid of two non-limiting examples, which are described with reference to the figures. Fig. 1 shows the fastening of a beam to a flat sandwich. Fig. 2 shows the fixing of a meat hook to the celing of a refrigerator car.

In Fig. 1 a sandwich material, which is included in a loading gate, consists of two facing layers 1, 2 surrounding a core 3 of structural cellular plastic. The adhesive layers bonding the facing layers 1 and 2 to the core are not shown for the sake of clarity, particularly since such sandwich structures are previously known.

An I-beam supports the platform from below and in accordance with the principle of the invention is attached via an intermediate plate 5. The intermediate plate is bonded with an adhesive layer 4 to the lower facing layer 2, and the flange of the I-beam is then bonded by means of the adhesive layer 6 to the intermediate plate 5. Divinycell type H200 with a thickness of e.g. 4 mm is used as an intermediate plate. In addition to said strength characteristics, two additional advantages will be noticed. If the beam 7 is of steel and the facing layer 2 is of aluminum, firstly there will be an electrical insulation so that galvanic corrosion will be eliminated, and secondly it will be possible to absorb relative changes of length due to differing coefficients of thermal expansion. Compared to an adhesive joint without an intermediate layer, greater security is obtained in several respects (an adhesive joint can have invisible damage, but in this case the damage is normally visible) and significantly improve the possibilities for repair. It is normally not possible to break adhesive bond without breaking the rest, but the intermediate layer of structural cellular plastic can be sawn into, and the remaining portions be simply cut or ground off.

Fig. 2 shows the mounting of a hook for an animal carcass on the ceiling of a refrigerator car. The details which are the same as in Fig. 1 have been given the same reference numerals. Instead of the flange of an I-beam, a metal plate 8 has been bonded, to which a meat-hook 10 is welded 9. In certain cases it is possible to have the intermediate plate 5 and the metal plate 8 be elongated and replace the hook 10 with a tube on which runners with hooks can be arranged, so that the carcasses or other cargo can be pushed around.

In one test, four corner boxes of standard type were fixed via three corner steel plates, with essentially the shape of equilateral right triangles, to a box made of sandwich material in the shape of a 40 ft. standard container. 4 mm Divinycell H200 was bonded between the triangles and the box of sandwich material. A test with a total load of 60 tons was made, which was distributed in a conventional manner at four points. A tensile load test of 35 tons was also made at one corner, and both tests were passed without faults.

## Claims

1. Method for fixing a load-applying object as a beam, hook or the like, presenting local forces, to a sandwich structure plate of the type in which a core (3) of structural cellular plastic or other high-quality core material is provided with a facing layer (1, 2) of sheet metal or other high-quality facing material bonded to the core with two-component adhesive, wherein said object (7, 8) is bonded on to said facing layer (2) by means of a two-component adhesive, characterized in that a plate (5) of a material with a lower modulus of elasticity than the modulus of elasticity of the adhesive joint (4, 6) is bonded with a two-component adhesive on to the facing layer (2), and that the object is bonded with two-component adhesive on to the opposite side of the plate.

2. Method according to Claim 1, characterized in that the plate with the lower modulus of elasticity than that of the adhesive consists of cellular plastic.

3. Method according to Claim 2, characterized in that a structural cellular plastic based on PVC is used as a cellular plastic.

4. Method according to any one of the preceding claims, characterized in that the plate of material with lower modulus of elasticity than that of the adhesive joint is bonded with adhesive onto that sided of the facing layer which is to form its interior side, that the object, which is a metal plate, is bonded to said plate and the sandwich construction is then finished by bonding the core and the opposite facing layer; and that holes are made in the first-mentioned facing layer, in the plate of material with a lower modulus of elasticity than that of the adhesive joint and in said metal plate, which can then be used to anchor members fixed to the outside of the first-mentioned facing layer by means of fasteners such as bolts.

## Patentansprüche

1. Verfahren zum Befestigen eines lastaufnehmenden Objekts wie beispielsweise eines Trägers, Hakens od. dgl., der lokale Kräfte erzeugt, an einer Platte aus Sandwich-Bauweise derjenigen Art, bei der ein Kern (3) aus strukturellem zellularem Kunststoff oder einem anderen Kernmaterial hoher Qualität mit einer Außenschicht (1, 2) aus Metallblech oder einem anderen Mantelmaterial hoher Qualität versehen ist, welches mittels eines Zweikomponentenklebstoffs mit dem Kern verklebt ist, wobei das Objekt (7, 8) mittels eines Zweikomponentenklebstoffs an die Außenschicht (2) angeklebt wird, dadurch gekennzeichnet, daß eine Platte (5) aus einem Material mit einem geringeren Elastizitätsmodul als das Elastizitätsmodul der Klebeverbindung (4, 6) mit einem Zweikomponentenklebstoff auf die Außenschicht (2) aufgeklebt wird und daß das Objekt mit einem Zweikomponentenklebstoff auf die gegenüberliegende Seite der Platte geklebt wird.

2. Verfahren nach Anspruch 1, dadurch gekennzeichnet, daß die Platte mit dem geringeren Elastizitätsmodul als der Klebstoff aus zellularem Kunststoff besteht.

3. Verfahren nach Anspruch 2, dadurch gekennzeichnet, daß als zellularer Kunststoff ein struktureller zellularer Kunststoff auf der Basis von PVC verwendet wird.

4. Verfahren nach einem der vorhergehenden Ansprüche, dadurch gekennzeichnet, daß die Platte mit geringerem Elastizitätsmodul als dasjenige der Klebeverbindung mittels Klebstoff auf diejenige Seite der Außenschicht geklebt wird, die ihre innere Seite bilden soll, daß das Objekt, welches eine Metallplatte ist, an diese Platte geklebt wird und daß dann die Sandwich-Konstruktion fertiggestellt wird, indem der Kern und die gegenüberliegende Außenschicht angeklebt werden; und daß dann in der zuerst genannten Außenschicht, in der Platte aus Material mit geringerem Elastizitätsmodul als dasjenige der Kleberverbindung und in der Metallplatte Löcher hergestellt werden, die dann dazu verwendet werden können, Glieder, die mittels Befestigungselementen, wie beispielsweise Bolzen, an der Außenseite der zuerst genannten Außenschicht befestigt werden, zu verankern.

**Revendications**

1. Procédé pour fixer un objet d'application d'une charge, tel qu'une poutre, un crochet ou autre, sousmis à des efforts locaux, sur une plaque ayant une structure en sandwich, du type dans laquelle un noyau (3), réalisé en une matière plastique alvéolée structurelle ou en un autre matériau pour noyaux de qualité supérieure, est pourvu d'une couche de revêtement (1, 2), en feuille métallique ou en un autre matériau de revêtement de qualité supérieure, liée au noyau à l'aide d'un adhésif à deux composants, procédé selon lquel ledit objet (7, 8) est lié à ladite couche de revêtement (2) au moyen d'un adhésif à deux composants, caractérisé en ce qu'une plaque (5), faite en un matériau qui présente un module d'élasticité inférieur au module d'élasticité du joint adhésif (4, 6) est liée, à l'aide d'un adhésif à deux composants, à la couche de revêtement (2), et en ce que l'objet est lié, au moyen d'un adhésif à deux composants, à la face opposée de la plaque.

2. Procédé selon la revendication 1, caractérisé en ce que la plaque dont le module d'élasticité est inférieur à celui de l'adhésif, est réalisée en une matière plastique alvéolée.

3. Procédé selon la revendication 2, caractérisé en ce qu'une matière plastique alvéolée structurelle, à base de PVC, est utilisée en tant que matière plastique alvéolée.

4. Procédé selon l'une quelconque des revendication précédentes, caractérisé en ce que la plaque réalisée en un matériau qui présente un module d'élasticité inférieur à celui du joint adhésif, est liée, à l'aide d'un adhésif, à celle des faces de la couche de revêtement, qui est destinée à en constituer la face intérieure; en ce que l'objet, qui est une plaque métallique, est liée à ladite plaque et la construction en sandwich est ensuite achevée par une liaison entre le noyau et la couche de revêtement opposée; et en ce que des perçages sont pratiqués dans la couche de revêtement mentionnée en premier, dans la plaque de matériau présentant un module d'élasticité inférieure à celui du joint adhésif et dans ladite plaque métallique, ces perçages pouvant être ensuite utilisés pour l'ancrage d'éléments fixés sur l'extérieur de la couche de revêtement mentionnée en premier, à l'aide d'organes de serrage, tels que des boulons.

FIG.1

FIG.2